# EUROPÄISCHE PATENTSCHRIFT

(11) **EP 2 203 526 B1**
(45) Veröffentlichungstag und Bekanntmachung des Hinweises auf die Patenterteilung: **15.06.2011**
(21) Anmeldenummer: 08843283.6
(22) Anmeldetag: 20.10.2008
(51) Int. Cl.: C09C 1/02, C08J 5/18, C08K 9/02, C08K 3/30

(54) **ADDITIV FÜR POLYMERE UND VERFAHREN ZU DESSEN HERSTELLUNG**
ADDITIVE FOR POLYMERS AND PROCESS FOR PREPARATION THEREOF
ADDITIF POUR POLYMÈRES ET SON PROCÉDÉ DE PRODUCTION

(30) Priorität: 22.10.2007 DE 102007050728
(43) Veröffentlichungstag der Anmeldung: 07.07.2010
(73) Patentinhaber: Sachtleben Chemie GmbH, 47198 Duisburg (DE)
(72) Erfinder: EBBINGHAUS, Peter, 45699 Herten (DE); BECKER, Bernhard, 47809 Krefeld (DE); KOHNERT, Jens, 46519 Alpen (DE); HOCKEN, Jörg, 40670 Meerbusch (DE); SCHELLEN, Ralf, 47445 Moers (DE); KLEIN, Bernd-Michael, 47138 Duisburg (DE); MÜLLER, Friedrich, 47198 Duisburg (DE); GROTHE, Sonja, 46147 Oberhausen (DE); ROHE, Bernd, 47445 Moers (DE)
(74) Vertreter: Nobbe, Matthias
(86) Internationale Anmeldenummer: PCT/EP2008/008870
(87) Internationale Veröffentlichungsnummer: WO 2009/053018

(56) Entgegenhaltungen:
- WO-A-2008/155050
- DE-A1- 3 347 191
- DE-A1- 4 431 735

## Beschreibung

Die Erfindung betrifft ein Verfahren zur Herstellung eines Additivs für Polymere, das Additiv selbst sowie die Verwendung des Additivs zur Verbesserung der Oberflächeneigenschaften von Polymeren, insbesondere in Form von Filmen, Fasern und Lacken.

Polymerfolien neigen dazu aneinander zu haften, so dass Filmschichten in der Weiterverarbeitung oftmals nur sehr schwer voneinander getrennt werden können. Die zu Grunde liegenden Mechanismen für dieses "blocking" sind nicht vollständig verstanden, jedoch werden unter Anderem nachfolgende Aspekte der Adhäsionskräfte in der Literatur genannt
- Prozessparameter, z.B. Temperatur, Druck
- Migration von niedermolekularen Polymerbestandteilen
- Elektrostatische und andere anziehende Kräfte
- Oberflächenstruktur

Die Minimierung der notwendigen Kraft zur Trennung von Filmschichten ist abhängig von den vorgenannten Aspekten, und der Einfluss auf die Verringerung der Adhäsionskräfte wird als "anti-blocking" definiert.

Bei der Herstellung von Polymerfilmen werden im Stand der Technik für diesen Zweck üblicherweise organische oder anorganische Additive, wie Fettsäureverbindungen oder anorganisches teilchenförmiges Material überwiegend auf Silikatbasis, zugesetzt, die eine Oberflächenrauhigkeit induzieren und die so als "Abstandshalter" zwischen den Filmschichten fungieren, wodurch die Adhäsionskräfte minimiert werden. Beispielhaft wird hier auf G. Wypych "Handbook of Antiblocking, Release, and Slip Additives" (Hanser Verlag - 2005) oder H. Zweifel "Plastics Additives Handbook" (Hanser Verlag - 2000) sowie WO 96/001289 verwiesen.

Auf der anderen Seite üben diese organischen oder anorganische Additive neben diesem erwünschten Effekt der COF-Reduktion (coefficient of friction) gleichzeitig auch unerwünschten negativen Einfluss auf die optischen Eigenschaften, wie z.B. Glanz (gloss), Trübung (haze), Lichtdurchlässigkeit (transmittance) und die Verarbeitbarkeit des Polymers aus, so dass oftmals ein Kompromiss zwischen verarbeitungstechnischen und optischen Anforderungen an die Folie gefunden werden muss.

Ein diesen Aspekten in mehrfacher Hinsicht genügendes Additiv ist jedoch im Stand der Technik nicht bekannt, und daher bestand die Aufgabe der Erfindung darin, ein Additiv bereitzustellen, das sich sowohl gut in das Polymer einarbeiten lässt, als auch das so mit dem Additiv kompoundierte Polymer selbst sich gut verarbeiten lässt und das Additiv dem Polymer gute optische Eigenschaften bei gleichzeitig hervorragenden "anti-blocking"-Eigenschaften verleiht.

Seitens der Erfinder ist nun überraschenderweise herausgefunden worden, dass sich ein solches Additiv mittels des Verfahrens mit den Merkmalen gemäß Hauptanspruch erhalten lässt.

So betrifft die vorliegende Erfindung ein Verfahren zur Herstellung eines Additivs für Polymere, das dadurch gekennzeichnet ist, dass man
- Phosphorsäure H₃PO₄ oder eine wasserlösliche Phosphatverbindung in einer Menge von 0,1 bis 10 Gew.-% (berechnet als P₂O₅ und bezogen auf trockenes BaSO₄) zu einer gerührten, 0,5 bis 50 Gew.-% BaSO₄ enthaltenden wässrigen Suspension zugibt;
- danach Na₂SiO₃ in einer Menge von 0,1 bis 15 Gew.-% (berechnet als SiO₂ und bezogen auf trockenes BaSO₄) zu der gerührten Suspension gemäß Verfahrensschritt (a) zugibt, wobei der pH-Wert der Suspension unter 7,5 gehalten wird;
- anschließend eine wasserlösliche Aluminiumverbindung in einer Menge von 0,1 bis 20 Gew.-% (berechnet als Al₂O₃ und bezogen auf BaSO₄) zu der gerührten Suspension gemäß Verfahrensschritt (b) zugibt, wobei der pH-Wert der Suspension nicht unter 4,5 gehalten wird; und
- schließlich den suspendierten Feststoff von der wässrigen Phase der Suspension gemäß Verfahrensschritt (c) abtrennt und trocknet;
wobei die Verfahrensschritte zur Zugabe der Reagenzien jeweils über einen Zeitraum von 30 bis 90 Minuten in einem Temperaturbereich von unter 65 °C durchgeführt werden.

Vorzugsweise werden die Verfahrensschritte (a), (b), und (c) im Temperaturbereich von 55 bis unter 65 °C durchgeführt. Weiter verbesserte Additive werden erhalten, wenn die Verfahrensschritte a., b. und c. jeweils über einen Zeitraum von 50 bis 70 Minuten durchgeführt werden.

Die Erfinder haben ferner festgestellt, dass die Eigenschaften des Produktes noch weiter verbessert werden, wenn das Produkt einem weiteren Verfahrensschritt zur Beschichtung mit einem organischen Beschichtungsmittel unterzogen wird.

Das organische Beschichtungsmittel ist dabei bevorzugt ein Netz-, Dispergier- oder Deflockulationsmittel. Darunter ist eine grenzflächenaktive Substanz zu verstehen, die das Dispergieren eines pulverförmigen Stoffes in einem flüssigen Medium erleichtert, indem die Grenzflächenspannung zwischen zwei gegensätzlich geladenen Komponenten durch "Umladen" der Oberfläche herabgesetzt wird. Dadurch werden beim Dispergiervorgang die vorhandenen Agglomerate zerlegt, so dass eine Re-Agglomeration (Zusammenballung) oder Flockulation (Zusammenlagerung) verhindert wird.

Als Netz-, Dispergier- oder Deflockulationsmittel (im Folgenden nur noch Dispergiermittel genannt) können sowohl ionogene als auch nichtionogene Dispergiermittel verwendet werden. Bevorzugt können folgende Stoffe eingesetzt werden: Alkalimetallsalze organischer Säuren (z.B. Salze der Poly(meth)acrylsäure, Essigsäure, Zitronensäure), insbesondere Alkali-, Erdalkali- und Zinksalze der Essigsäure und/oder Zitronensäure, Alkali- oder Erdalkalimetallsalze von Acrylat oder Methacrylatcopolymeren (mit einem bevorzugten Molekulargewicht bis zu 16000), Polyphosphate (anorganische oder organische Polyphosphate, z.B. Kaliumtripolyphosphat, Poly(meth)acrylatphosphate), allgemein Poly(meth)aycrylate, Polyether, anionisch modifizierte Polyether, Fettalkoholpolyglycolether, Polyalkohole, z.B. Trimethylolpropan, modifizierte Polyurethane oder anionenaktive aliphatische Ester oder Mischungen davon. Bevorzugt sind Alkalimetallsalze organischer Säuren, z.B. Salze der Poly(meth)acrylsäure und / oder Polyphosphate, z.B. Kaliumtripolyphosphat.

Die Zugabemenge des Beschichtungsmittels ist abhängig von der mittleren Teilchengröße der anorganischen Festkörper. Je feiner die anorganischen Festkörperpartikel sind, desto höher ist die Zugabemenge des Dispergiermittels. Die Zugabemenge des Dispergiermittels beträgt maximal 20 Gew.-% und liegt bevorzugt bei 0,01 bis 20 Gew.-%, besonders bevorzugt bei 0,05 bis 10 Gew.-% und bezogen auf das fertige beschichtete Produkt.

Dabei kann der Verfahrenschritt zur Beschichtung mit dem organischen Beschichtungsmittel vorzugsweise über einen Zeitraum von 5 bis 60 Minuten bevorzugt bei einer Temperatur von 40 bis 80 °C durchgeführt werden.

Zur Verbesserung der Einarbeitbarkeit in das Polymer und der optischen Eigenschaften des Polymers wie verringerter Trübung und Glanz kann das aus der Suspension abgetrennte Produkt einem Mahlschritt, vorzugsweise in einer Prall- oder Strahlmühle, unterzogen werden, um Korngrößen von mehr als 15µm abzutrennen und insbesondere eine Korngröße von unter 10 µm zu erhalten. Weiterhin bevorzugt ist es, den Mahlschritt solange fortzusetzen, bis die Korngrößen der erhaltenen Additiv-Teilchen im Korngrößenbereichen von 4,5-7,5 µm, 2,5-3,5 µm, 1,2 - 1,6 µm und 0,2-0,9 µm liegen. Je nach verwendetem Polymer, insbesondere bei solchen für verstreckte Folien und Fasern, können die Korngrößen so gewählt werden, um dem Polymer die gewünschten optischen und Antiblocking-Eigenschaften zu verleihen.

Von besonderem Vorteil ist somit, dass sich mittels der erfindungsgemäß behandelten Additivteilchen Masterbatches und Compounds von thermoplastischen Kunststoffen herstellen lassen, in denen die Additivteilchen so ausgezeichnet dispergiert sind, dass daraus hochwertige Produkte ohne besonderen zusätzlichen Aufwand herstellbar sind. Das Einbringen des Additivs in den Polymerprozess kann neben einem Extrusions-Masterbatch auch über eine Slurry-Route erfolgen.

Die Erfindung ist daher auch gerichtet auf ein Additiv für Polymere, das nach dem erfindungsgemäßen Verfahren erhältlich ist.

Besonders gut kann das erfindungsgemäß hergestellte Additiv zur Verbesserung der Antiblocking-Eigenschaften bei Polymerfolien verwendet werden. Das Polymer wird dabei bevorzugt aus der Gruppe der thermoplastischen Polymere ausgewählt. Hierzu gehören insbesondere Polyimide, Polyamide, Polyester, PVC oder Polyolefine aus olefinischen Monomeren mit 2 bis 8 C-Atomen. Besonders geeignet ist das Additiv für Polymerfolien aus Polyester, wobei PET besonders bevorzugt ist. Anhand der bei Verwendung des erfindungsgemäß hergestellten Additivs gemessenen Werte lässt sich eine deutliche Verbesserung der COF-Werte der Folien belegen.

Neben der Verbesserung der Antiblocking-Eigenschaften haben die Erfinder Untersuchungen zur Verbesserung der optischen Eigenschaften der Polymere durchgeführt und festgestellt, dass die erfindungsgemäß hergestellten Additive den Polymeren, insbesondere in Folienform, eine geringere Trübung, eine erhöhte Lichtdurchlässigkeit als auch verbesserten Glanz verleihen. So lassen sich hochglänzende Folien bei gleichzeitigem verringerter Trübung herstellen.

Der Gehalt an Additiv im Polymer liegt dabei vorzugsweise im Bereich von 200 bis 10.000 ppm, besonders bevorzugt im Bereich von 200 bis 5000 ppm jeweils bezogen auf das fertige Produkt.

Entsprechend lassen sich bei Verwendung des erfindungsgemäßen Additivs für ein vorgenanntes Polymer auch sogenannte "super bright yarn"-Fasern herstellen, die ein hochglänzendes Gewebe ergeben. Hierzu eignet sich bevorzugt ein erfindungsgemässes Additiv mit einer Teilchengröße von 0,2-0,9 µm.

Beim Einsatz eines erfindungsgemässen Additives zur Herstellung von PCB-Inks zeigt sich, dass sich Lackschichten mit den angestrebten, im Vergleich zu derzeit eingesetzten Additiven verbesserten optischen Eigenschaften (erhöhter Glanz, verminderte Trübung) bei gleichzeitiger Erreichung der geforderten Eigenschaften hinsichtlich beispielsweise Rheologiekontrolle, chemische Beständigkeit und Lötbarkeit erzielen lassen.

Grundsätzlich dient die Zugabe von inerten Partikeln zu einem PCB-Lackes dazu, die rheologischen Eigenschaften der Druckfarbe so zu steuern, dass u.a. Schichtdicke, Kantenabdeckung und Lötbarkeit entsprechend vorgegebener Toleranzen der Leiterbahnen eingestellt werden können.

Beim Einsatz eines erfindungsgemäßen Additives zur Herstellung von PCB-Inks zeigt sich, dass sich Lackschichten mit den angestrebten, im Vergleich zu derzeit eingesetzten Additiven verbesserten optischen Eigenschaften (erhöhter Glanz, verminderte Trübung) bei gleichzeitiger Erreichung geforderter Anforderungen hinsichtlich beispielsweise Rheologiekontrolle, chemischer Beständigkeit, Dispergierbarkeit erzielen lassen.

Der Gehalt an Additiv im PCB-Lack liegt dabei vorzugsweise im Bereich von 5,0 bis 70,0 Gew.-% und besonders bevorzugt im Bereich von 15,0 bis 50,0 Gew.-%.

Die mittlere Partikelgröße des erfindungsgemäßen Additivs liegt für die Anwendung in "PCB-Inks" bevorzugt im Bereich von 0,05 - 2,00 µm, besonders bevorzugt bei 0,2 - 0,9 µm.

Seitens der Erfinder wurde ferner herausgefunden, dass das erfindungsgemäße Additiv auch zur Verbesserung der Verarbeitbarkeit von Polymerfasern eingesetzt werden kann. Im Stand der Technik sind als Nachteil von glänzenden (bright) und hochglänzenden (superbright) Fasern und Filamenten insbesondere die schlechten Verspinnbarkeiten (Fadenbrüche) bekannt. Eine bekannte Möglichkeit zu Verbesserung der Verspinnbarkeit ist der Einsatz kleiner Mengen (≤ 0,05 Gew.-%) von TiO₂-Partikeln. Die Verwendung von TiO₂ wirkt sich aber gleichzeitig negativ auf die optischen Eigenschaften wie z.B. den Glanz der Fasern und Filamente aus.

Durch den Einsatz des erfindungsgemäßen BaSO₄-Additivs wird eine Verbesserung der Verspinnbarkeit von Polymer-Fasern erreicht, ohne dabei die optischen Eigenschaften wie den Glanz zu verschlechtern. Die Verbesserung der Verspinnbarkeit zeigt sich direkt in der merklichen Reduzierung der Fadenbrüche. Zudem besteht durch den Einsatz des erfindungsgemäßen Additivs die Möglichkeit, die Spinngeschwindigkeit zu erhöhen.

Die optischen Eigenschaften der Polymer-Fasern werden üblicherweise an daraus hergestellten Gestricken oder Geweben visuell bewertet oder mittels gängiger Messverfahren (bekannt z.B. für die Bewertung von Farben & Lacken) gemessen.

Die Synthesefaser besteht in der Regel aus thermoplastischen Materialien wie beispielsweise Polyester, Polyamid, Polyethylen oder Polypropylen, vorzugsweise aus Polyamid oder PET. Der Gehalt an erfindungsgemäßem Additiv im Polymer liegt dabei vorzugsweise im Bereich von 0,01 bis 1,00 Gew.-%, besonders bevorzugt im Bereich von 0,05 bis 0,3 Gew.-%, jeweils bezogen auf das fertige Produkt.

Die mittlere Partikelgröße des erfindungsgemäßen Additivs liegt für die Anwendung in Polymer-Fasern bevorzugt im Bereich von 0,05 - 2,00 µm, besonders bevorzugt bei 0,2 - 0,9 µm.

Vorzugsweise wird das erfindungsgemäße Additiv bereits bei der Polymerherstellung zugegeben, z.B. bei der Polykondensation von PET in Form einer Dispersion in Ethylenglykol. Alternativ kann zunächst ein Masterbatch mittels Schmelzextrusion hergestellt werden, der vorzugsweise 5 - 80 Gew.-% erfindungsgemäß hergestelltem Bariumsulfat enthält. Dieses Masterbatch kann dann mit dem Rohpolymer verdünnt und ggf. nochmals dispergiert werden.

Die Filamente werden unter Verwendung des additivierten Polymers oder eines Masterbatches unter Zugabe von reinen PET wie folgt hergestellt. Die Aufschmelzung erfolgt in der Regel in einem Extruder, der eine Spinnanlage mit mehreren Spinnpositionen bedient. Nach dem Austritt der Fäden aus den Spinndüsen und der Abkühlung erfolg der Auftrag eines Spinnfinish. Anschließend wird das Filament zwischen Streckspulen mit variabel einstellbarer Temperatur und variabel einstellbarem Streckverhältnis verstreckt. Die Aufwicklung auf der Spule erfolgt über einen Spuler mit variabel einstellbarer Umdrehung.

Im Hinblick auf die Verwendung des erfindungsgemäßen Additivs in Filmen konnten die Erfinder anhand von Untersuchungen zeigen, dass die Verwendung des erfindungsgemäßen Additivs zumindest die gleiche oder sogar verbesserte "antiblock-performance" (COF) wie Silica und andere Bariumsulfate bei gleichzeitig verbesserten optischen Filmeigenschaften (Glanz, Trübung, Lichtdurchlässigkeit) und bei gleichzeitg verbesserten Verarbeitungseigenschaften mit sich bringt.

Hierzu zeigen die Tabellen 1, 2 und 3 den Vergleich von COF-Wert, Glanz und Trübung bei silica-basiertem Additiv und anderen Bariumsulfaten gegenüber dem erfindungsgemäßen Additiv.

Die Erfindung wird anhand der folgenden Beispiele weiter erläutert.

Allgemein kann Bariumsulfat durch Reaktion eines Bariumsalzes wie die Reaktion des Sulfides, Chlorides oder Nitrates mit Schwefelsäure oder einem Salz hiervon wie Natriumsulfat in einer wässrigen Lösung hergestellt werden. Diese Reaktion liefert im allgemeinen Bariumsulfat, das üblicherweise eine primäre Partikelgröße von 0,01 bis 20 µm besitzt. Das auf diese Weise hergestellte Bariumsulfat wird abfiltriert, mit Wasser gewaschen, getrocknet und für verschiedene Anwendungszwecke desagglomeriert. Für die folgenden Beispiele wird das Bariumsulfat in Form eines Filterkuchens oder einer Suspension, d.h. vor der Trocknung und Desagglomeration, eingesetzt.

Die Erfindung wird anhand der folgenden Beispiele weiter erläutert.

### Beispiel 1

In einem offenen Glasgefäß werden 10 g Bariumsulfat mit einer Korngröße von 0,6 µm in 1000 g destilliertes Wasser gegeben und die erhaltene Suspension auf eine Temperatur von 60 °C erwärmt. Es werden 0,75g einer 20%igen wässrigen Phosphorsäure (ca. 110 mg P₂O₅) innerhalb von 90 min zugetropft; in analoger Weise werden 0,60 ml einer Na₂SiO₃-Lösung (450 g/l - ca. 135 mg SiO₂) zugetropft und der pH-Wert auf unter 7,5 eingestellt. Die Suspension wird weitere 60 min gerührt, bevor die anschließende Zugabe von 3,00 ml einer Al₂(SO₄)₃-Lösung (150 g/l - ca. 135 mg Al₂O₃) innerhalb von 90 min bei einem pH-Wert größer 4,5 erfolgt. Während der Reifung der Suspension über einen Zeitraum von 120 min wird ein organisches Beschichtungsmittel zugesetzt, und der Feststoff nachfolgend mittels Filtration abgetrennt und auf einen Leitfähigkeit von < 500 µS/cm gewaschen. Der Filterkuchen wird mit VE-Wasser auf einen Feststoffgehalt von 15 Gew.-% angeschlämmt und sprühgetrocknet. Das so erhaltene erfindungsgemäße Bariumsulfat (ca. 10 g) hat eine Korngröße von 0,7 µm, und enthält 9,8 g BaSO₄, 70 mg P₂O₅, 100 mg SiO₂ und 130 mg Al₂O₃.

### Beispiel 2

Als Ausgangsmaterialen dienten:
- BaSO₄. Filterkuchen mit 35 % Feststoffgehalt und einem d_{50,3} der Volumenverteilung von d_{50,3} = 0,4 µm (gemessen mittels Scheibenzentrifuge "CPS Disc Centrifuge, Model DC2400" der Fa. CPS, USA)
- VE-Wasser mit einer Leitfähigkeit von ca. 3 µS/cm
- Schwefelsäure 5%ig
- Na₂SiO₃-Lösung mit 384 g SiO₂/l
- Al₂(SO₄)₃-Lösung mit 75 g Al₂O₃/l
- NaAlO₂-Lösung mit 262 g Al₂O₃/l

3434 g BaSO₄ Paste (=̂ 1202 g BaSO₄) wurden in ein Becherglas eingewogen und der Feststoffgehalt durch Zugabe von VE-H₂O auf 15 % eingestellt. Die Suspension wurde auf 55 °C erwärmt und dann auf pH 7,5 eingestellt. Der Suspension wurden 25 g einer 20 %igen Phosphorsäure (H₃PO₄) innerhalb von 60 min zugetropft, was einem Anteil von 0,3 % P₂O₅ bezogen auf BaSO₄ entspricht. In analoger Weise werden 15,7 mL Na₂SiO₃-Lösung zugegeben, was einem Anteil von 0,5 % SiO₂ bezogen auf BaSO₄ entspricht. Dabei wurde der pH-Wert so eingestellt, dass der pH-Wert 7,5 nicht überschreitet. Es wurde weitere 50 min bei 60 °C gerührt. Anschließend wurde innerhalb von 60 min 26,2 mL NaAlO₂-Lösung zugegeben, was einem Anteil von 0,57 % Al₂O₃ bezogen auf BaSO₄ entspricht. Der pH-Wert wurde so geregelt, dass er pH 4,5 nicht unterschreitet. Anschließend wurde die Suspension für 70 min bei einer Temperatur von 60 °C gerührt (Reifezeit). Danach wurde die Suspension über eine Nutsche abgesaugt und auf einen Leitfähigkeit von < 200 µS/cm gewaschen. Der Filterkuchen wird mit VE-Wasser auf einen Feststoffgehalt von 15 Gew.-% angeschlämmt und sprühgetrocknet.

### Beispiel 3

Als Ausgangsmaterialen dienten:
- BaSO₄- Filterkuchen mit 35 % Feststoffgehalt und einem d_{50,3} der Volumenverteilung von d_{50,3} = 0,4 µm (gemessen mittels Scheibenzentrifuge "CPS Disc Centrifuge, Model DC2400" der Fa. CPS, USA)
- VE-Wasser mit einer Leitfähigkeit von ca. 3 µS/cm
- Schwefelsäure 5%ig
- Na₂SiO₃-Lösung mit 384 g SiO₂/l
- Al₂(SO₄)₃-Lösung mit 75 g Al₂O₃/l
- NaAlO₂-Lösung mit 262 g Al₂O₃/l
- 1,1,1-Trimethylolpropan (TMP)

3440 g BaSO₄ Paste (=̂ 1204 g BaSO₄) wurden in ein Becherglas eingewogen und der Feststoffgehalt durch Zugabe von VE-H₂O auf 25 % eingestellt. Die Suspension wurde auf 55 °C erwärmt und dann auf pH 7 eingestellt. Der Suspension wurden 25 g einer 20 %igen Phosphorsäure (H₃PO₄) innerhalb von 60 min zugetropft, was einem Anteil von 0,3 % P₂O₅ bezogen auf BaSO₄ entspricht.

In analoger Weise werden 15,7 mL Na₂SiO₃-Lösung zugegeben, was einem Anteil von 0,5 % SiO₂ bezogen auf BaSO₄ entspricht. Dabei wurde der pH-Wert so eingestellt, dass der pH-Wert 7,5 nicht überschreitet. Es wurde weitere 60 min bei 60 °C gerührt. Anschließend wurde innerhalb von 70 min 26,2 mL NaAlO₂-Lösung zugegeben, was einem Anteil von 0,57 % Al₂O₃ bezogen auf BaSO₄ entspricht. Der pH-Wert wurde so geregelt, dass er pH 4,5 nicht unterschreitet. Anschließend wurde die Suspension für 70 min bei einer Temperatur von 60 °C gerührt (Reifezeit). Danach wurde die Suspension über eine Nutsche abgesaugt und auf einen Leitfähigkeit von < 200 µS/cm gewaschen. Der Filterkuchen wird mit VE-Wasser auf einen Feststoffgehalt von 30 Gew.-% angeschlämmt mit 0,3 Gew.-% TMP versetzt und sprühgetrocknet und luftstrahlgemahlen.

### Beispiel 4

Als Ausgangsmaterialen dienten:
- BaSO₄ - Filterkuchen mit 50 % Feststoffgehalt und einem d_{50,3} der Volumenverteilung von d_{50,3} = 1,1 µm (gemessen mittels Scheibenzentrifuge "CPS Disc Centrifuge, Model DC2400" der Fa. CPS, USA)
- VE-Wasser mit einer Leitfähigkeit von ca. 3 µS/cm
- Schwefelsäure 5%ig
- Na₂SiO₃-Lösung mit 384 g SiO₂/l
- Al₂(SO₄)₃-Lösung mit 75 g Al₂O₃/l
- NaAlO₂-Lösung mit 262 g Al₂O₃/l

2420 g BaSO₄ Paste (=̂ 1210 g BaSO₄) wurden in ein Becherglas eingewogen und der Feststoffgehalt durch Zugabe von VE-H₂O auf 25 % eingestellt. Die Suspension wurde auf 55 °C erwärmt und dann auf pH 7 eingestellt. Der Suspension wurden 25 g einer 20 %igen Phosphorsäure (H₃PO₄) innerhalb von 70 min zugetropft, was einem Anteil von 0,3 % P₂O₅ bezogen auf BaSO₄ entspricht. In analoger Weise werden 15,7 mL Na₂SiO₃-Lösung zugegeben, was einem Anteil von 0,5 % SiO₂ bezogen auf BaSO₄ entspricht. Dabei wurde der pH-Wert so eingestellt, dass der pH-Wert 7,5 nicht überschreitet. Es wurde weitere 40 min bei 60°C gerührt. Anschließend wurde innerhalb von 60 min 26,2 mL NaAlO₂-Lösung zugegeben, was einem Anteil von 0,57 % Al₂O₃ bezogen auf BaSO₄ entspricht. Der pH-Wert wurde so geregelt, dass er pH 4,5 nicht unterschreitet. Anschließend wurde die Suspension für 90 min einer Temperatur von 60 °C gerührt (Reifezeit). Danach wurde die Suspension über eine Nutsche abgesaugt und auf einen Leitfähigkeit von < 300 µS/cm gewaschen. Der Filterkuchen wird mit VE-Wasser auf einen Feststoffgehalt von 20 Gew.-% angeschlämmt und sprühgetrocknet.

### Vergleichsbeispiel 1

Als Ausgangsmaterialen dienten:
- BaSO₄₋ Filterkuchen mit 35 % Feststoffgehalt und einem d_{50,3} der Volumenverteilung von d_{50,3} = 0,4 µm (gemessen mittels Scheibenzentrifuge "CPS Disc Centrifuge, Model DC2400" der Fa. CPS, USA)
- VE-Wasser mit einer Leitfähigkeit von ca. 3 µS/cm
- Schwefelsäure 5%ig
- Natronlauge 5%ig

In ein Becherglas wurde 3428 g BaSO₄ - Paste (~ 1200 g BaSO₄) eingewogen und die entsprechenden Menge VE-H₂O zugegeben, um einen Feststoffgehalt von 20 % einzustellen. Der pH-Wert der Suspension betrug 5,0. Der Ansatz wurde dispergiert, und die so erhaltene Suspension wurde unter Rühren auf 80 °C erwärmt. Durch langsame Zugabe von 5 %-iger Natronlauge über einen Zeitraum von 30 Minuten wird die Suspension auf einen pH-Wert von pH 7,5 gebracht. Anschließend wurde die Suspension für eine weitere Stunde bei einer Temperatur von 70 °C gerührt (Reifezeit). Danach wurde die Suspension über eine Nutsche abgesaugt und auf einen Leitfähigkeit von < 300 µS/cm gewaschen. Der Filterkuchen wird mit VE-Wasser auf einen Feststoffgehalt von 15 Gew.-% angeschlämmt und sprühgetrocknet.

### Vergleichsbeispiel 2

Als Ausgangsmaterialen dienten:
- BaSO₄₋ Filterkuchen mit 50 % Feststoffgehalt und einem d_{50,3} der Volumenverteilung von d_{50,3} =1,1 µm (gemessen mittels Scheibenzentrifuge "CPS Disc Centrifuge, Model DC2400" der Fa. CPS, USA)
- VE-Wasser mit einer Leitfähigkeit von ca. 3 µS/cm
- Schwefelsäure 5%ig
- Natronlauge 5%ig

In ein Becherglas wurde 2400 g BaSO₄ - Paste (~ 1200 g BaSO₄) eingewogen und die entsprechenden Menge VE-H₂O zugegeben, um einen Feststoffgehalt von 30% einzustellen. Der pH-Wert der Suspension betrug 4,6. Der Ansatz wurde dispergiert, und die so erhaltene Suspension wurde unter Rühren auf 80 °C erwärmt. Durch langsame Zugabe von 5 %-iger Natronlauge über einen Zeitraum von 30 Minuten wird die Suspension auf einen pH-Wert von pH 7,5 gebracht. Anschließend wurde die Suspension für eine weitere Stunde bei einer Temperatur von 70 °C gerührt (Reifezeit). Danach wurde die Suspension über eine Nutsche abgesaugt und auf einen Leitfähigkeit von < 300 µS/cm gewaschen. Der Filterkuchen wird mit VE-Wasser auf einen Feststoffgehalt von 20 Gew.-% angeschlämmt und sprühgetrocknet.

### Vergleichsbeispiel 3

- BaSO₄₋ Filterkuchen mit 50 % Feststoffgehalt und einem d_{50,3} der Volumenverteilung von d_{50,3} =1,1 µm (gemessen mittels Scheibenzentrifuge "CPS Disc Centrifuge, Model DC2400" der Fa. CPS, USA)
- VE-Wasser mit einer Leitfähigkeit von ca. 3 µS/cm
- Natronlauge 5%ig
- Salzsäure 5 %ig
- Na₂SiO₃-Lösung mit 384 g SiO₂/l
- NaAlO₂-Lösung mit 262 g Al₂O₃/l
- BaS-Lösung mit 50 - 55 g BaS/l

1800 g BaSO₄- Paste wurden in ein Becherglas eingewogen und mit VE-H₂O auf 3300 g angeschlämmt. Die Suspension wurde auf 70 °C erwärmt und dann mit Natronlauge auf pH 7,5 eingestellt. Anschließend wurde mit 350 mL BaS-Lösung (~ 50 - 55 g BaS/L) ein Bariumüberschuss von ca. 5 g Ba²⁺ /l eingestellt. Mit Salzsäure wurde wieder auf pH 7 eingestellt, dann wurde Na₂SiO₃-Lösung (0,2 % SiO₂ bezogen auf BaSO₄) zugegeben. Mit Salzsäure wurde auf pH 4,0 eingestellt und 30 min gereift. Mit Natronlauge wurde auf pH 6,0 gestellt und unter pH-Haltung NaAlO₂-Lösung (0,1 % Al₂O₃ bezogen auf BaSO₄) zugegeben. Danach erfolgte die Einstellung auf pH 7,0 und 30 min Reifung. Danach wurde die Suspension über eine Nutsche abgesaugt und auf einen Leitfähigkeit von < 300 µS/cm gewaschen. Der Filterkuchen wird mit VE-Wasser auf einen Feststoffgehalt von 20 Gew.-% angeschlämmt und sprühgetrocknet.

### Vergleichsbeispiel 4

- BaSO₄₋ Filterkuchen mit 35 % Feststoffgehalt und einem d_{50,3} der Volumenverteilung von d_{50,3} = 0,4 µm (gemessen mittels Scheibenzentrifuge "CPS Disc Centrifuge, Model DC2400" der Fa. CPS, USA)
- VE-Wasser mit einer Leitfähigkeit von ca. 3 µS/cm
- Natronlauge 5%ig
- Salzsäure 5 %ig
- Na₂SiO₃-Lösung mit 384 g SiO₂/l
- NaAlO₂-Lösung mit 262 g Al₂O₃/l
- BaS-Lösung mit 50 - 55 g BaS/l

2500 g BaSO₄- Paste wurden in ein Becherglas eingewogen und mit VE-H₂O auf 3300 g angeschlämmt. Die Suspension wurde auf 70 °C erwärmt und dann mit Natronlauge auf pH 7 eingestellt. Anschließend wurde mit 350 mL BaS-Lösung ein Bariumüberschuss von ca. 5 g Ba²⁺ /l eingestellt. Mit Salzsäure wurde wieder auf pH 7 eingestellt, dann wurde Na₂SiO₃-Lösung (0,1 % SiO₂ bezogen auf BaSO₄) zugegeben. Mit Salzsäure wurde auf pH 4 eingestellt und 30 min gereift. Mit Natronlauge wurde auf pH 6,0 gestellt und unter pH-Haltung NaAlO₂-Lösung (0,2 % Al₂O₃ bezogen auf BaSO₄) zugegeben. Danach erfolgte die Einstellung auf pH 7,0 und 30 min Reifung. Danach wurde die Suspension über eine Nutsche abgesaugt und auf einen Leitfähigkeit von < 300 µS/cm gewaschen. Der Filterkuchen wird mit VE-Wasser auf einen Feststoffgehalt von 15 Gew.-% angeschlämmt und sprühgetrocknet.

### Vergleichsbeispiel 5 (gemäß DE 44 31 735)

Als Ausgangsmaterialen dienten:
- BaSO₄ - Filterkuchen mit 35 % Feststoffgehalt und einem d_{50,3} der Volumenverteilung von d_{50,3} = 0,4 µm (gemessen mittels Scheibenzentrifuge "CPS Disc Centrifuge, Model DC2400" der Fa. CPS, USA)
- VE-Wasser mit einer Leitfähigkeit von ca. 3 µS/cm
- Schwefelsäure 5%ig
- Na₂SiO₃-Lösung mit 384 g SiO₂/l
- Al₂(SO₄)₃-Lösung mit 75 g Al₂O₃/l
- NaAlO₂-Lösung mit 262 g Al₂O₃/l

Die Herstellung des Vergleichsbeispiels 4 wurde in ein Becherglas gefahren. 3440 g BaSO₄ Paste (=̂ 1204 g BaSO₄) wurden eingewogen und die entsprechenden Menge VE-H₂O zugegeben, um einen Feststoffgehalt von 30 % einzustellen. Die Suspension wurde auf 70 °C erwärmt und dann auf pH 7 eingestellt. Der Suspension wurden 25 g einer 20 %igen Phosphorsäure (H₃PO₄) innerhalb von 10 min zugegeben, was einem Anteil von 0,3 % P₂O₅ bezogen auf BaSO₄ entspricht. Danach wurde innerhalb von 10 min 15,7 mL Na₂SiO₃-Lösung zugegeben, was einem Anteil von 0,5 % SiO₂ bezogen auf BaSO₄ entspricht. Dabei wurde der pH-Wert so eingestellt, dass der pH-Wert 7,5 nicht überschreitet. Es wurde weitere 15 min bei 70 °C gerührt. Anschließend wurde innerhalb von 10 min 26,2 mL NaAlO₂-Lösung zugegeben, was einem Anteil von 0,57 % Al₂O₃ bezogen auf BaSO₄ entspricht. Der pH-Wert wurde so geregelt, dass er pH 4,5 nicht unterschreitet. Anschließend wurde die Suspension für zwei weitere Stunde bei einer Temperatur von 70 °C gerührt (Reifezeit). Danach wurde die Suspension über eine Nutsche abgesaugt und auf einen Leitfähigkeit von < 500 µS/cm gewaschen. Der Filterkuchen wird mit VE-Wasser auf einen Feststoffgehalt von 15 Gew.-% angeschlämmt und sprühgetrocknet.

### I. Einarbeitung der in den Vergleichsbeispielen und Beispielen hergestellten Bariumsulfat-Proben in ein Polymer über den Polykondensationsprozess

Ausgehend von den Bariumsulfat-Proben der Vergleichsbeispiele 1-5 und der Beispiele 1-4 wurden PET-Folien wie folgt hergestellt. 800 g des jeweiligen Bariumsulfats wurden in 800 g Monoethylenglykol (MEG) durch Mahlen in einer Rührwerkskugelmühle intensiv dispergiert. Die erhaltenen Suspensionen wurden mit weiterem MEG auf einen Feststoffgehalt von 20 Gew.-% verdünnt.

Die Herstellung der Polyester-Granulate mit niedrigen Füllgrad an Bariumsulfat wurde wie nachstehend beschrieben in bekannter Weise durchgeführt. In einem Batch-Reaktor wurden je 10,16 kg Polyester-Vorkondensat (BHET der Fa. Aldrich) und je 1 l MEG vorgelegt und aufgeschmolzen. Nach ca. 1 Stunde wurde in den Behälter eine Paste aus je 25 kg Terephthalsäure und je 10 I MEG eingespeist. Die Veresterung erfolgte in bekannter Weise über einen Zeitraum von ungefähr 160 Minuten, wobei die Temperatur des Reaktionsgemisches ca. 280 °C erreichte. Der Endpunkt der Veresterungsreaktion wurde durch das Ende der Wasserabspaltung definiert. Dann erfolge die Zugabe von je 0,77 kg der 20 %-igen Bariumsulfat-MEG-Suspension zum Reaktionsgemisch. Das System wurde zur vollständigen Durchmischung noch 20 Minuten bei 250 bis 270 °C unter Rühren gehalten, mit 1084,7 ml einer 1,29 %-igen Sb₂O₃-MEG-Suspension als Polykondensationskatalysator versetzt, weitere 10 Minuten gerührt und dann in den Polykondensationsrekator überführt.
Die anschließende Durchführung der Polykondensation erfolgte in bekannter Weise unter Druckverminderung bis 2 mbar Enddruck, einer Temperatur des Reaktionsgemischs von 285 bis 290°C über eine Zeit von 111 Minuten. Als Kriterium für das Ende der Reaktion wurde die Zunahme des Drehmoments am Rührer verfolgt. Danach erfolgte das Auspressen der Schmelze aus dem Reaktor mit Stickstoffüberdruck, Kühlung und Granulierung des Polymerstranges. Die erhalten Granulate enthielten 0,2 % des Bariumsulfats (bestimmt durch Ermittlung des Veraschungsrückstandes).

### II. Einarbeitung der in den Vergleichsbeispielen und Beispielen hergestellten Bariumsulfat-Proben in ein Polymer über den Extrusionsprozess

Ausgehend von den Bariumsulfat-Proben der Vergleichsbeispiele 1-5 und der Beispiele 1-4 wurden PET-Folien wie folgt hergestellt.

Gemahlenes PET-Polymer wird im Vakuumtrockenschrank bei 80 °C 16 Stunden getrocknet. Danach wird eine Mischung aus 5 % Bariumsulfat und 95 % dieses getrockneten PET-Polymers mit einer Gesamtmenge von 3000 g hergestellt. Diese Mischung wird über einen Doppelschneckenextruder mit einer Schneckenfunktionslänge von 110,5 cm und einem Durchmesser von 34 mm bei einer Temperatur von 260 - 270 °C extrudiert. Das hergestellte Masterbatch wird im Vakuumtrockenschrank 12 - 16 h bei 150 °C kristallisiert. Durch weiteres Verdünnen mit getrocknetem PET-Polymer wird die gewünschte Bariumsulfat-Konzentration in einem Einschneckenextruder hergestellt. In diesem Schritt werden durch Extrudieren durch einen Flachfolienaufsatz sogleich die Folien hergestellt.

### III. Verwendungsbeispiele

Die Materialien der Vergleichsbeispiele 1 - 5 und der Beispiele 1 - 4 sowie ein Silica-basiertes Additiv werden in gleicher Weise zunächst zu einem 5%igen PET-Masterbatch extrudiert, um hieraus zunächst ca. 100 µm dünne PET-Castfolien über einen Flachfolienaufsatz am Extruder zu fertigen, die ihrerseits nachfolgend biaxial zu ca. 10 µm dünnen BOPET-Folien verstreckt werden. Dazu werden 10 x 10 cm große Ausschnitte der extrudierten Flachfolie bei einer Temperatur von 100 °C mit konstanter Verstreckungsgeschwindigkeit und einer Streckrate von 3 x 3 verstreckt.

Die erhaltenen BOPET-Folien wurden hinsichtlich COF, gloss, haze untersucht. Die Ergebnisse der Untersuchungen sind in den Tabellen 1 bis 3 dargestellt.

Aus der Aufstellung der COF-Werte (s. Tabelle 1) lässt sich entnehmen, dass die Folien mit den erfindungsgemäßen Additiven auf einem vergleichbaren - tendenziell niedrigerem - COF-Niveau als die Folien mit den Vergleichsbeispielen und Silica liegen.

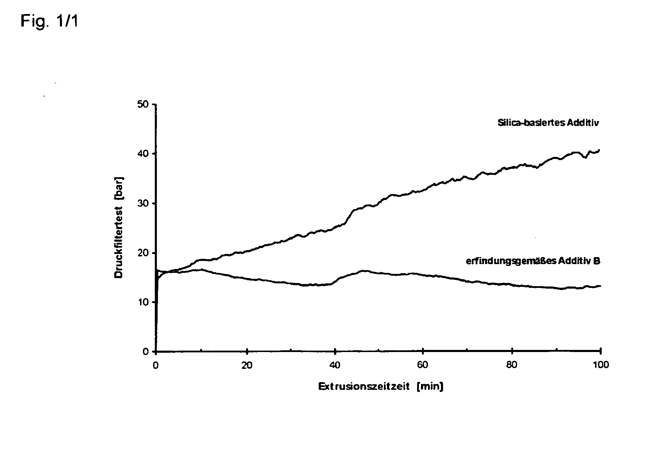

Beim Gloss zeigen sich deutliche Unterschiede (s. Tabelle 2). Die Folien mit Materialien der erfindungsgemäßen Beispiele liegen auf einem deutlich höheren Niveau als Silica-enthaltende Folien. Auch die nicht nachbehandelten Bariumsulfate der Vergleichsbeispiele 1 und 2 führen zu einer deutlichen Reduzierungen des Gloss in den Folien. Die erfindungsgemäßen Materialien zeigen in Folien eine sehr geringe Trübung (s. Tabelle 3), die deutlich niedriger ist als bei den Folien mit Materialien der Vergleichsbeispiele sowie Silica. Insbesondere das luftstrahlgemahlene Material aus Beispiel 3 zeigt einen sehr geringen Haze. Der Extrusions-Masterbatch mit dem erfindungsgemäßen Additiv aus Beispiel 1 zeichnet sich darüber hinaus durch einen vergleichsweise signifikant niedrigeren Druckfiltertest aus (s. Fig. 1). Das dabei eingesetzte AB-Additiv ist nach Beispiel 1 hergestellt worden.

Anhand der in den Tabellen 1 bis 3 dargestellten Ergebnisse ist ersichtlich, dass sich die erfindungsgemäß hergestellten Additive gleichzeitig sehr günstig auf die wünschenswerten Eigenschaften des Polymers auswirken.

**Tabelle 1 - COF- A/B kinetisch (nach DIN EN ISO 8295)**

| Additiv | 0 ppm | 500 ppm | 1000 ppm | 1500 ppm | 2000 ppm |
|---|---|---|---|---|---|
| Silica-basiertes Additiv | 0,40 | 0,36 | 0,35 | 0,30 | 0,36 |
| Vergleichsbeispiel 1 | 0,40 | 0,39 | 0,35 | 0,30 | 0,32 |
| Vergleichsbeispiel 2 | 0,40 | 0,35 | 0,34 | 0,34 | 0,34 |
| Vergleichsbeispiel 3 | 0,40 | 0,36 | 0,35 | 0,35 | 0,35 |
| Vergleichsbeispiel 4 | 0,40 | 0,39 | 0,35 | 0,33 | 0,34 |
| Vergleichsbeispiel 5 | 0,40 | 0,40 | 0,37 | 0,36 | 0,37 |
| Beispiel 1 | 0,40 | 0,40 | 0,29 | 0,29 | 0,33 |
| Beispiel 2 | 0,40 | 0,38 | 0,29 | 0,28 | 0,29 |
| Beispiel 3 | 0,40 | 0,36 | 0,27 | 0,27 | 0,28 |
| Beispiel 4 | 0,40 | 0,33 | 0,33 | 0,32 | 0,32 |

**Tabelle 2 - Gloss 45° in % (nach ASTM 2457)**

| Additiv | 0 ppm | 500 ppm | 1000 ppm | 1500 ppm | 2000 ppm |
|---|---|---|---|---|---|
| Silica-basiertes Additiv | 129 | 108 | 106 | 86 | 76 |
| Vergleichsbeispiel 1 | 129 | 105 | 101 | 89 | 75 |
| Vergleichsbeispiel 2 | 129 | 107 | 100 | 87 | 72 |
| Vergleichsbeispiel 3 | 129 | 118 | 111 | 107 | 101 |
| Vergleichsbeispiel 4 | 129 | 116 | 109 | 107 | 102 |
| Vergleichsbeispiel 5 | 129 | 116 | 110 | 110 | 103 |
| Beispiel 1 | 129 | 124 | 121 | 118 | 114 |
| Beispiel 2 | 129 | 126 | 124 | 121 | 118 |
| Beispiel 3 | 129 | 128 | 125 | 123 | 119 |
| Beispiel 4 | 129 | 125 | 121 | 115 | 115 |

**Tabelle 3 - Haze in % (nach ASTM 1003**

| Additiv | 0 ppm | 500 ppm | 1000 ppm | 1500 ppm | 2000 ppm |
|---|---|---|---|---|---|
| Silica-basiertes Additiv | 1,0 | 5,0 | 6,0 | 14,0 | 24,0 |
| Vergleichsbeispiel 1 | 1,0 | 7,0 | 12,5 | 21,0 | 34,0 |
| Vergleichsbeispiel 2 | 1,0 | 9,5 | 16,5 | 26,0 | 38,0 |
| Vergleichsbeispiel 3 | 1,0 | 2,5 | 5,0 | 5,5 | 6,5 |
| Vergleichsbeispiel 4 | 1,0 | 3,0 | 3,5 | 4,5 | 6,0 |
| Vergleichsbeispiel 5 | 1,0 | 3,0 | 6,5 | 8,0 | 10,5 |
| Beispiel 1 | 1,0 | 2,5 | 2,5 | 3,0 | 3,5 |
| Beispiel 2 | 1,0 | 1,5 | 2,0 | 2,5 | 3,0 |
| Beispiel 3 | 1,0 | 1,0 | 1,0 | 1,5 | 2,0 |
| Beispiel 4 | 1,0 | 2,0 | 2,5 | 3,0 | 4,0 |

## Patentansprüche

1. Verfahren zur Herstellung eines Additivs für Polymere, **dadurch gekennzeichnet, dass**
a. Phosphorsäure H₃PO₄ oder eine wasserlösliche Phosphatverbindung in einer Menge von 0,1 bis 10 Gew.-% (berechnet als P₂O₅ und bezogen auf trockenes BaSO₄) zu einer gerührten, 0,5 bis 50 Gew.-% BaSO₄ enthaltenden wässrigen Suspension zugegeben werden;
b. danach Na₂SiO₃ in einer Menge von 0,1 bis 15 Gew.-% (berechnet als SiO₂ und bezogen auf trockenes BaSO₄) zu der gerührten Suspension gemäß Verfahrensschritt (a) zugegeben wird, wobei der pH-Wert der Suspension unter 7,5 gehalten wird;
c. anschließend eine wasserlösliche Aluminiumverbindung in einer Menge von 0,1 bis 20 Gew.-% (berechnet als Al₂O₃ und bezogen auf BaSO₄) zu der gerührten Suspension gemäß Verfahrensschritt (b) wird, wobei der pH-Wert der Suspension nicht unter 4,5 gehalten wird; und
d. schließlich der suspendierte Feststoff von der wässrigen Phase der Suspension gemäß Verfahrensschritt (c) abgetrennt und getrocknet wird;
wobei die Verfahrensschritte a., b. und c. jeweils über einen Zeitraum von 30 bis 90 Minuten in einem Temperaturbereich von unter 65 °C durchgeführt werden.

2. Verfahren nach Anspruch 1, **dadurch gekennzeichnet, dass** die Verfahrensschritte (a), (b), und (c) im Temperaturbereich von 55 bis unter 65 °C durchgeführt werden.

3. Verfahren nach Anspruch 1 oder 2, **dadurch gekennzeichnet, dass** die Verfahrensschritte a., b. und c. jeweils über einen Zeitraum von 50 bis 70 Minuten durchgeführt werden.

4. Verfahren nach einem der vorhergehenden Ansprüche, **dadurch gekennzeichnet, dass** das Produkt von Verfahrenschritt c) einem weiteren Verfahrenschritt zur Beschichtung mit einem organischen Beschichtungsmittel unterzogen wird, wobei das organische Beschichtungsmittel aus der Gruppe der Netz-, Dispergier- oder Deflockulationsmitteln oder Mischungen davon ausgewählt wird.

5. Verfahren nach Anspruch 4, wobei der Verfahrenschritt zur Beschichtung mit einem organischen Beschichtungsmittel über einem Zeitraum von 5 bis 60 Minuten bei einer Temperatur von 40 bis 80 °C durchgeführt wird.

6. Verfahren nach Anspruch 4 oder 5, wobei das organische Beschichtungsmittel aus der Gruppe ausgewählt wird, die Alkalimetallsalze organischer Säuren wie Salze der Poly(meth)acrylsäure), Alkalimetallsalze organischer Säuren insbesondere Salze der Poly(meth)acrylsäure, Essigsäure, Zitronensäure, davon insbesondere Alkali-, Erdalkali- und Zinksalze der Essigsäure und/oder Zitronensäure, Alkali- oder Erdalkalimetallsalze von Acrylat- oder Methacrylatcopolymeren (mit einem bevorzugten Molekulargewicht bis zu 16000), Polyphosphate (anorganische oder organische Polyphosphate, wie Kaliumtripolyphosphat, Poly(meth)acrylatphosphate), allgemein Poly(meth)aycrylate, Polyether, anionisch modifizierte Polyether, Fettalkoholpolyglycolether, Polyalkohole, modifizierte Polyurethane oder anionenaktive aliphatische Ester oder Mischungen davon umfasst.

7. Verfahren nach einem der vorhergehenden Ansprüche, **dadurch gekennzeichnet, dass** das Produkt von Verfahrensschritt d) einem Mahlschritt, vorzugsweise in einer Prall- oder Strahlmühle, oder einer Sichtung unterzogen wird, um eine Korngröße von unter 10 µm zu erhalten.

8. Additiv für Polymere, erhältlich nach dem Verfahren gemäß einem der Ansprüche 1 bis 7.

9. Verwendung des Additivs nach Anspruch 8 zur Verbesserung der Antiblocking-Eigenschaften des Polymers, zur Verbesserung der optischen Eigenschaften des Polymers oder zur Verbesserung der Verarbeitungseigenschaften von Polymerfasern.

10. Polymer mit einem Gehalt an Additiv nach Anspruch 8, vorzugsweise im Bereich von 200 bis 10.000 ppm bezogen auf das fertige Produkt.

11. Verwendung des Polymers nach Anspruch 10 bei der Herstellung von Folien.

12. Folie, erhältlich nach dem Verfahren nach Anspruch 11.

13. Polymerfaser, **gekennzeichnet durch** einen Gehalt an Additiv nach Anspruch 8.

14. Verwendung des Additivs nach Anspruch 8 als Bestandteil von Beschichtungsmitteln, insbesondere PCB-Inks.

15. Beschichtungsmittel, insbesondere PCB-Ink, **gekennzeichnet durch** einen Gehalt an Additiv nach Anspruch 8.

## Claims

1. A process for the production of an additive for polymers, **characterised in that**
a. phosphoric acid H₃PO₄ or a water-soluble phosphate compound is added in an amount of 0.1 to 10% by weight (calculated as P₂O₅ and related to dry BaSO₄) to an agitated aqueous suspension containing 0.5 to 50% by weight of BaSO₄;
b. thereafter Na₂SiO₃ is added in an amount of 0.1 to 15% by weight (calculated as SiO₂ and related to dry BaSO₄) to the agitated suspension in accordance with process step (a), wherein the pH-value of the suspension is kept below 7.5;
c. then a water-soluble aluminum compound is added in an amount of 0.1 to 20% by weight (calculated as Al₂O₃ and related to BaSO₄) to the agitated suspension in accordance with process step (b), wherein the pH-value of the suspension is not kept below 4.5; and
d. finally the suspended solid is separated from the aqueous phase of the suspension in accordance with process step (c) and dried;
wherein the process steps a, b and c are each carried out over a period of time of 30 to 90 minutes in a temperature range of below 65°C.

2. A process as set forth in claim 1 **characterised in that** the process steps (a), (b) and (c) are carried out in the temperature range of 55° to below 65°C.

3. A process as set forth in claim 1 or claim 2 **characterised in that** the process steps a, b and c are each carried out over a period of time of 50 to 70 minutes.

4. A process as set forth in one of the preceding claims **characterised in that** the product of process step (c) is subjected to a further process step for coating with an organic coating agent, wherein the organic coating agent is selected from the group of crosslinking, dispersing or deflocculating agents or mixtures thereof.

5. A process as set forth in claim 4 wherein the process step for coating with an organic coating agent is carried out over a period of 5 to 60 minutes at a temperature of 40 to 80°C.

6. A process as set forth in claim 4 or claim 5 wherein the organic coating agent is selected from the group which includes alkali metal salts of organic acids such as salts of poly(meth)acrylic acid, alkali metal salts of organic acids, in particular salts of poly(meth)acrylic acid, acetic acid, citric acid, thereof in particular alkali, alkaline earth and zinc salts of acetic acid and/or citric acid, alkali or alkaline earth metal salts of acrylate or methacrylate copolymers (with a preferred molecular weight of up to 16,000), polyphosphates (inorganic or organic polyphosphates such as potassium tripolyphosphate, poly(meth)acrylate phosphates), generally poly(meth)acrylates, polyethers, anionically modified polyethers, fatty alcohol polyglycol ethers, polyhydric alcohols, modified polyurethanes or anion-active aliphatic esters or mixtures thereof.

7. A process as set forth in one of the preceding claims **characterised in that** the product of process step (d) is subjected to a grinding step, preferably in an impact or jet mill, or to a sifting operation to obtain a grain size of below 10 µm.

8. An additive for polymers, obtainable by the process as set forth in one of claims 1 to 7.

9. Use of the additive as set forth in claim 8 for improving the anti-blocking properties of the polymer, for improving the optical properties of the polymer or for improving the processing properties of polymer fibers.

10. A polymer having a content of additive as set forth in claim 8, preferably in the range of 200 to 10,000 ppm with respect to the finished product.

11. Use of the polymer as set forth in claim 10 in the production of films.

12. A film obtainable by the process as set forth in claim 11.

13. A polymer fiber **characterised by** a content of additive as set forth in claim 8.

14. Use of the additive as set forth in claim 8 as a constituent of coating agents, in particular PCB inks.

15. A coating agent, in particular a PCB ink, **characterised by** a content of additive as set forth in claim 8.

## Revendications

1. Procédé de fabrication d'un additif pour polymères, **caractérisé en ce que**
a. on ajoute de l'acide phosphorique H₃PO₄ ou un composé de phosphate hydrosoluble dans une quantité de 0,1 à 10 % en poids (calculés en tant que P₂O₅ et rapportés à BaSO₄ sec), à une suspension aqueuse sous agitation contenant de 0,5 à 50 % en poids de BaSO₄ ;
b. on ajoute ensuite à la suspension sous agitation selon l'étape de procédé (a) Na₂SiO₃ dans une quantité de 0,1 à 15 % en poids (calculés en tant que SiO₂ et rapportés à BaSO₄ sec), la valeur de pH de la suspension étant maintenue sous 7,5 ;
c. on ajoute ensuite à la suspension sous agitation selon l'étape de procédé (b) un composé d'aluminium hydrosoluble dans une quantité de 0,1 à 20 % en poids (calculés en tant qu'Al₂O₃ et rapportés à BaSO₄), la valeur de pH de la suspension étant maintenue à une valeur non inférieure à 4,5 ; et
d. enfin, on sépare le solide en suspension de la phase aqueuse de la suspension selon l'étape de procédé (c) et on le sèche ;
les étapes de procédé a, b, et c étant conduites respectivement sur une durée de 30 à 90 minutes et dans une plage de température inférieure à 65 °C.

2. Procédé selon la revendication 1, **caractérisé en ce que** les étapes de procédé (a), (b) et (c) sont conduites dans une plage de température de 55 à moins de 65 °C.

3. Procédé selon la revendication 1 ou 2, **caractérisé en ce que** les étapes de procédé a., b. et c. sont conduites respectivement sur une durée de 50 à 70 minutes.

4. Procédé selon l'une des revendications précédentes, **caractérisé en ce que** le produit de l'étape de procédé (c) est soumis à une autre étape de procédé permettant une enduction avec un agent de revêtement organique, où l'agent de revêtement organique est sélectionné dans le groupe composé d'agents mouillants, de dispersants ou d'agents défloculants, ou de mélanges de ceux-ci.

5. Procédé selon la revendication 4, dans lequel l'étape de procédé permettant l'enduction d'un agent de revêtement organique est effectuée sur une durée de 5 à 60 minutes, à une température de 40 à 80 °C.

6. Procédé selon la revendication 4 ou 5, dans lequel l'agent de revêtement organique est sélectionné dans le groupe qui comprend des sels de métal alcalin d'acides organiques tels que des sels de l'acide poly(méth)acrylique, des sels de métal alcalin d'acides organiques, en particulier des sels de l'acide poly(méth)acrylique, de l'acide acétique, de l'acide citrique, et parmi eux en particulier des sels alcalins, alcalino-terreux et de zinc de l'acide acétique et/ou de l'acide citrique, des sels de métal alcalin ou alcalino-terreux de copolymères d'acrylate ou de méthacrylate (avec un poids moléculaire préféré jusqu'à 16 000), des polyphosphates (polyphosphates organiques ou inorganiques, tels que du tripolyphosphate de potassium, des phosphates de poly(méth)acrylate), d'une façon générale des poly(méth)acrylates, des polyéthers, des polyéthers modifiés par voie anionique, des polyglycoléthers d'alcool gras, des polyols, des polyuréthanes modifiés ou des esters aliphatiques à anions actifs, ou des mélanges de ceux-ci.

7. Procédé selon l'une des revendications précédentes, **caractérisé en ce que** le produit de l'étape de procédé (d) est soumis à une étape de broyage, de préférence dans un broyeur à percussion ou dans un broyeur à jet, ou à un criblage, afin d'obtenir une taille de particules inférieure à 10 µm.

8. Additif pour polymères, pouvant être obtenu selon le procédé selon l'une des revendications 1 à 7.

9. Utilisation de l'additif selon la revendication 8 pour améliorer les propriétés anti-adhérentes du polymère, pour améliorer les propriétés optiques du polymère, ou pour améliorer les propriétés de mise en oeuvre de fibres polymères.

10. Polymère présentant une teneur en additif selon la revendication 8, de préférence dans la plage de 200 à 10 000 ppm, rapportés au produit fini.

11. Utilisation du polymère selon la revendication 10 dans la fabrication de feuilles.

12. Feuille, pouvant être obtenue selon le procédé selon la revendication 11.

13. Fibre polymère, **caractérisée par** une teneur en additif selon la revendication 8.

14. Utilisation de l'additif selon la revendication 8 en tant que composant d'agents de revêtement, en particulier d'encres pour circuits imprimés.

15. Agent de revêtement, en particulier encre pour circuits imprimés, **caractérisé par** une teneur en additif selon la revendication 8.
